# EUROPÄISCHE PATENTANMELDUNG

(11) **EP 3 901 611 A1**
(43) Veröffentlichungstag der Anmeldung: **27.10.2021**
(21) Anmeldenummer: 20170760.1
(22) Anmeldetag: 22.04.2020
(51) Int. Cl.: G01N 15/02, G01N 15/14, G01N 1/22, G01N 15/00

(54) **KIT MIT ABSCHEIDEVORRICHTUNG UND PARTIKELSENSOR, VERWENDUNG DES KITS, STAUB-VORRICHTUNG UND VERFAHREN ZUR STEUERUNG DER STAUB-VORRICHTUNG**

(71) Anmelder: Hilti Aktiengesellschaft, 9494 Schaan (LI)
(72) Erfinder: Ohlendorf, Oliver, 86899 Landsberg (DE)
(74) Vertreter: Hilti Aktiengesellschaft Corporate Intellectual Property

(57) **Zusammenfassung**

Kit (1) umfassend eine Abscheidevorrichtung (2) und einen Partikelsensor (3), wobei der Partikelsensor (3) dazu eingerichtet ist, Partikel in einem Fluidstrom (4) zu analysieren, wobei die Abscheidevorrichtung (2) in dem Kit (1) dem Partikelsensor (3) vorgelagert angeordnet ist und dazu eingerichtet ist, nur alveolengängige Partikel in dem Fluidstrom (4) zu belassen, so dass nur die alveolengängigen Partikel den Partikelsensor (3) erreichen und von diesem analysiert werden.

## Beschreibung

Die vorliegende Erfindung betrifft ein Kit, das eine Abscheidevorrichtung und einen Partikelsensor umfasst. Das Kit ist dadurch gekennzeichnet, dass die Abscheidevorrichtung in dem Kit dem Partikelsensor vorgelagert ist und dazu eingerichtet ist, nur alveolengängige Partikel in dem Fluidstrom zu belassen, so dass nur diejenigen Partikel den Partikelsensor erreichen und von diesem analysiert werden, die einen Partikeldurchmesser in einem Bereich von 0 bis 10 µm aufweisen. Dadurch kann der Partikelsensor wirksam vor unerwünschten Verschmutzungen geschützt werden und seine Messgenauigkeit durch die Reduzierung der in seinen Messbereich gelangenden zu analysierenden Partikel erheblich erhöht werden. In einem zweiten Aspekt betrifft die Erfindung die Verwendung des vorgeschlagenen Kits in einer Staub-Vorrichtung, beispielsweise um die Staub-Vorrichtung in Abhängigkeit der mit dem vorgeschlagenen Kit ermittelten Messergebnisse zu steuern. In weiteren Aspekten betrifft die Erfindung eine Staub-Vorrichtung, die ein vorgeschlagenes Kit umfasst, sowie ein Verfahren zur Steuerung einer Staub-Vorrichtung in Abhängigkeit der mit dem Kit ermittelten Messdaten.

### Hintergrund der Erfindung:

Es sind im Stand der Technik Partikel- oder Staubsensoren bekannt, die dazu verwendet werden, die Luftqualität in einem Raum oder einem Luftvolumen zu bestimmen. Konventionelle Staubsensoren, wie sie aus dem Stand der Technik bekannt sind, arbeiten mit einem konstanten Mess-Luftvolumenstrom. Mit anderen Worten wird in den Messgeräten die gesamte schwebefähige Staubfraktion eingesagt und untersucht. Diese Zweiphasen-Strömung kann in den bekannten Messgeräten analysiert werden. Schwebefähige Partikel weisen beispielsweise einen Durchmesser von 0 bis weit über 100 µm auf.

Nachteilig an den bekannten Messgeräten ist, dass die meisten Geräte nicht für die Analyse der Staubpartikel im gesamten, auftretenden Durchmesserbereich ausgelegt sind. Die meisten der konventionellen Geräte weisen einen optimalen Arbeitsbereich auf, der beispielsweise durch eine Kalibrierung des Geräts eingestellt werden kann. Es sind im Stand der Technik beispielsweise Messgeräte bekannt, die dazu ausgelegt sind, Partikel mit einem Durchmesser von 0 bis 16 µm zu analysieren. Die Kalibrierung dieser Geräte kann beispielsweise durch den sogenannten PM-Wert angegeben werden. Es ergibt sich somit das Problem, dass durch die konventionellen Messgeräte ein Fluidstrom mit Partikeln mit allen Partikelgrößen geführt wird, obwohl das Messgerät lediglich zur Analyse eines kleinen Bereichs von Partikeldurchmessern ausgelegt ist. Die überschüssigen Partikel, die eigentlich nicht zur Analyse beitragen, da ihre Durchmesser nicht im Kalibrierungsbereich des Messgeräts liegen, werden allerdings nicht einfach durch das Messgerät hindurchgeleitet. Vielmehr reduzieren sie die Messgenauigkeit des Messgeräts und können zu unerwünschten Verschmutzungen und daraus resultierenden Beschädigungen des Staubsensors führen.

Aufgabe der vorliegenden Erfindung ist es somit, eine Messvorrichtung bereitzustellen, mit der die Untersuchung eines zu analysierenden Fluidstroms verbessert werden kann. Dabei soll insbesondere die Messgenauigkeit der Messungen, die mit der Messvorrichtung durchgeführt werden, erhöht und das Risiko von Verschmutzungen innerhalb der Messvorrichtung reduziert werden. Darüber hinaus soll eine Staub-Vorrichtung mit verbesserter Analysemöglichkeit eines Fluidstroms bereitgestellt werden, sowie ein Steuerungsverfahren für diese Staub-Vorrichtung.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Die Aufgabe wird gelöst durch ein Kit, das eine Abscheidevorrichtung und einen Partikelsensor umfasst, wobei der Partikelsensor dazu eingerichtet ist, Partikel in einem Fluidstrom zu analysieren. Das Kit ist dadurch gekennzeichnet, dass die Abscheidevorrichtung in dem Kit dem Partikelsensor vorgelagert angeordnet ist und dazu eingerichtet ist, nur alveolengängige Partikel in dem Fluidstrom zu belassen, so dass nur die alveolengängigen Partikel den Partikelsensor erreichen und von diesem analysiert werden.

Insbesondere betrifft die Erfindung eine spezifische Anordnung einer Abscheidevorrichtung mit bestimmten Eigenschaften in Bezug auf einem Partikelsensor. Die Anordnung ist dadurch gekennzeichnet, dass die Abscheidevorrichtung innerhalb des Kits an einer ersten Position angeordnet ist, während der Partikelsensor der Abscheidevorrichtung nachgelagert an einer zweiten Position innerhalb des Kits angeordnet vorliegt. Mit anderen Worten ist die Abscheidevorrichtung in Strömungsrichtung dem Partikelsensor vorgelagert bzw. der zu analysierende Fluidstrom passiert zunächst die Abscheidevorrichtung und anschließend den Partikelsensor. Es ist im Sinne der Erfindung bevorzugt, dass ein Messpfad hinter der Abscheidevorrichtung beginnt und einen Messbereich des Partikelsensors umfasst. Vorzugsweise findet die Untersuchung der Partikel in dem Fluidstrom durch das Kit im Messbereich des Partikelsensors statt. Durch die vorgeschlagene Anordnung bzw. Reihenfolge der Komponenten des vorgeschlagenen Kits wird vorteilhafterweise erreicht, dass mit der Abscheidevorrichtung ein erheblicher Teil der Partikel aus dem Fluidstrom herausgefiltert werden kann, so dass dieser herausgefilterte Anteil den Partikelsensor nicht mehr erreicht. Es hat sich herausgestellt, dass die Auswertung bzw. Analyse eines Mess-Fluidvolumens umso besser funktioniert, je weniger Partikel insgesamt in dem Mess-Fluidvolumen enthalten sind. Indem mit der vorgeschlagenen Erfindung bzw. der spezifischen Anordnung der Komponenten in dem vorgeschlagenen Kit ein erheblicher Anteil an Partikeln aus dem Mess-Fluidvolumen herausgefiltert bzw. abgeschieden werden kann, bevor der Fluidstrom den Partikelsensor erreicht, wird die insgesamt durch den Partikelsensor zu analysierende Menge an Partikeln erheblich reduziert. Insbesondere können mit der Erfindung diejenigen Partikel aus dem Fluidstrom herausgefiltert werden, die für die Analyse des Fluidstroms in Bezug auf seine Gesundheitsrelevanz nicht unbedingt erforderlich sind. Mit anderen Worten werden insbesondere überschüssige Partikel durch die Abscheidevorrichtung herausfiltert und insbesondere die gesundheitsrelevanten Partikel in dem Fluidstrom von dem Partikelsensor untersucht. Dadurch kann einerseits die Messgenauigkeit des Partikelsensors erheblich verbessert werden. Andererseits kann der Partikelsensor wirksam vor Verschmutzungen geschützt werden. Dieser Verschmutzungsschutz betrifft insbesondere die sensitive, bevorzugt optisch arbeitende Erfassungseinheit des Partikelsensors.

Bei dem zu analysierenden Fluidstrom handelt es sich insbesondere um einen Aerosolstrom. Dies bedeutet im Sinne der Erfindung bevorzugt, dass der Fluid- oder Aerosolstrom von einem heterogenen Gemisch gebildet wird, das feste Schwebeteilchen und ein Fluid, vorzugsweise ein Gas oder ein Gasgemisch, umfasst. Bei den Schwebeteilchen kann es sich insbesondere um Staubpartikel verschiedenster Größe handeln. Bei dem Fluid handelt es sich vorzugsweise um das bekannte Sauerstoff-Stickstoffgemisch, das die Atmosphäre der Erde bildet. Die Staubpartikel weisen Durchmesser in einem Bereich von 1 bis mehr als 100 µm auf. Dabei werden Staubpartikel, die einen Durchmesser von 0 bis 10 µm aufweisen, im Sinne der Erfindung als alveolengängige Partikel bezeichnet. Die Alveolen bilden als Lungenbläschen die menschliche Lunge, wobei in den Lungenbläschen der Gasaustausch im menschlichen Körper erfolgt. Dort wird Sauerstoff aus der Lunge ans Blut abgegeben und umgekehrt Kohlenstoffdioxid aus dem Blut in die Lunge aufgenommen, um das Kohlenstoffdioxid durch das Ausatmen aus dem menschlichen Körper zu entfernen. Tests haben gezeigt, dass vor allem Partikel mit einem Durchmesser von 0 bis 10 µm die physische Schranke, die von den Wänden der Lungenbläschen gebildet wird, überwinden können, weswegen solche Partikel als besonders gesundheitsgefährdend eingestuft werden. Staub mit Partikeldurchmessern von 0 bis 10 µm wird im Sinne der Erfindung bevorzugt als Feinstaub bezeichnet.

Ferner umfasst der Fluid- oder Aerosolstrom Partikel, die größere Partikeldurchmesser aufweisen. Beispielsweise weisen thorakale Partikel einen Durchmesser bis 30 µm auf, während die sogenannten "einatembaren" Partikel Partikeldurchmesser von 10 µm bis beispielsweise 1000 µm aufweisen, bevorzugt bis 500 µm und besonders bevorzugt bis 100 µm. Tests haben gezeigt, dass vor allem die Partikel mit einem Partikeldurchmesser von größer als 10 µm für Verschmutzungen konventioneller Partikelsensoren verantwortlich sind. Durch die Verschmutzungen kann es zu Erfassungsschwierigkeiten, erhöhten Messungenauigkeiten, Beschädigungen oder einem möglichen Totalausfall des Partikelsensors kommen. Es ist daher wesentlicher Vorteil, der mit der vorliegenden Erfindung erreicht wird, dass Partikel mit einem Partikeldurchmesser von größer als 10 µm aus dem Mess-Fluidstrom herausgefiltert werden können, damit diese Partikel gar nicht erst in Berührung mit dem Partikelsensor kommen. Mit anderen Worten ist es im Sinne der Erfindung bevorzugt, dass Partikel mit einem Durchmesser von größer als 10 µm von der Abscheidevorrichtung aus dem Fluidstrom herausgefiltert und aus dem Fluidstrom entfernt werden können, so dass diese Partikel wirksam daran gehindert werden, den Partikelsensor zu erreichen. Zur Entfernung der größeren Partikel wird insbesondere vorgeschlagen, dem Partikelsensor innerhalb des vorgeschlagenen Kits eine Abscheidevorrichtung vorzulagern. Die Abscheidevorrichtung ist dazu eingerichtet, Partikel mit einem Partikeldurchmesser von größer als 10 µm besonders sicher und zuverlässig aus dem Aerosolstrom zu entfernen. Dadurch wird vorteilhafterweise erreicht, dass nur die für die Messung und Analyse besonders relevanten alveolengängigen Feinstaubpartikel in den Messbereich des Partikelsensors gelangen. Mit anderen Worten kann mit der Erfindung sichergestellt werden, dass nur der gesundheitsrelevante Anteil von Partikeln beim Partikelsensor ankommt und analysiert werden kann. Darüber hinaus wird der Partikelsensor zuverlässig vor unerwünschten Verunreinigungen und daraus resultierenden Beschädigungen geschützt. Dadurch kann eine verbesserte Messgenauigkeit des Partikelsensors erreicht und die Lebensdauer des Sensors erheblich erhöht werden. Vorteilhafterweise wird mit der Erfindung insbesondere die Gesamtzahl der zu analysierenden Partikel reduziert, wodurch die Messgenauigkeit des Partikelsensors erhöht werden kann. Es ist im Sinne der Erfindung insbesondere bevorzugt, dass die zu analysierenden Partikel vom Partikelsensor insbesondere in Bezug auf ihre Größe, d.h. ihren Durchmesser, analysiert werden.

Ein weiterer wesentlicher Vorteil, der mit der Erfindung erreicht wird, besteht darin, dass der Anteil der gesundheitsrelevanten Partikel durch das Herausfiltern der nicht-alveolengängigen im Wesentlichen nicht beeinflusst wird, da diese Partikel gerade in dem Fluidstrom verbleiben und von dem Partikelsensor analysiert werden. Insofern erfolgt hier trotz der Reduktion der Partikelzahl, die die Messgenauigkeit des Kits erheblich erhöht, keine Beeinflussung oder Verzerrung der Messergebnisse. Tests haben gezeigt, dass durch die vorgeschlagene Anordnung von Abscheidevorrichtung und Partikelsensor zueinander überraschend genaue Messergebnisse erhalten werden können.

Es ist im Sinne der Erfindung bevorzugt, dass die Abscheidevorrichtung als Fliehkraftabscheider, Umlenkkammer oder als Zyklon ausgebildet ist. Bei einem Fliehkraftabscheider oder einem Zyklon wird die Zentrifugalkraft eingesetzt, um die festen Partikel aus dem Aerosol- bzw. Fluidstrom herauszufiltern. Abscheidevorrichtungen, wie Fliehkraftabscheider oder Zyklone, basieren vorzugsweise auf dem Prinzip der Massenkraftabscheidung, wobei insbesondere die unterschiedlichen Massen von verschiedenen Typen von Partikeln ausgenutzt werden, um die Partikel nach Gewicht und bei ähnlicher Dichte auch nach Größe oder Durchmesser zu sortieren. Zur Trennung der unterschiedlichen großen Partikel kann in der Abscheidevorrichtung eine Wirbelströmung erzeugt werden, wobei die unterschiedlich großen Partikel aufgrund ihrer unterschiedlich großen Massen unterschiedlich großen Zentrifugalkräften ausgesetzt sind. Tests haben gezeigt, dass im Kontext der vorliegenden Erfindung Fliehkraftabscheider oder Zyklone, die als Abscheidevorrichtung im vorgeschlagenen Kit eingesetzt werden, besonders gut dazu geeignet sind, Partikel mit einem Durchmesser von größer als 10 µm aus dem Fluidstrom herauszufiltern.

Bei einer Umlenkkammer kann es sich im Sinne der Erfindung bevorzugt um eine Kammer handeln, in der ein Fluidstrom auf einer kurzen Strecke möglichst stark umgelenkt wird. Mit anderen Worten ist die Umlenkkammer in ihrem Inneren vorzugsweise so ausgestaltet, dass ein Fluidstrom ein besonders starke Ablenkung erfahren kann.

Es ist im Sinne der Erfindung bevorzugt, dass die Abscheidevorrichtung eine selektiv arbeitende Abscheidevorrichtung ist. Das bedeutet im Sinne der Erfindung bevorzugt, dass die Abscheidevorrichtung dazu eingerichtet ist, Partikel je nach dem Partikeldurchmesser aus dem Fluidstrom herauszufiltern. Beispielsweise ist es im Sinne der Erfindung ganz besonders bevorzugt, dass die Abscheidevorrichtung dazu eingerichtet ist, Partikel mit einem Durchmesser von größer als 10 µm aus dem Fluidstrom herauszufiltern, während Partikel mit einem kleineren Partikeldurchmesser, d.h. einem Partikeldurchmesser von kleiner als 10 µm oder in einem Bereich von 0 bis 10 µm, in dem Aerosolstrom verbleiben. Mit anderen Worten kann die Abscheidevorrichtung als Filter fungieren, wobei die Abscheidevorrichtung insbesondere dazu eingerichtet ist, die zu analysierenden Partikel nach Partikeldurchmesser zu selektieren und selektiv durchzulassen oder herauszufiltern. Der Begriff "durchlassen" bedeutet im Sinne der Erfindung bevorzugt, dass die "durchgelassenen" Partikel in dem Fluidstrom verbleiben können, so dass sie an einer der Abscheidevorrichtung nachgelagerten Position innerhalb des vorgeschlagenen Kits von dem Partikelsensor analysiert werden können. Es ist im Sinne der Erfindung ganz besonders bevorzugt, dass die vorzugsweise selektiv arbeitende Abscheidevorrichtung dazu eingerichtet ist, alveolengängige Partikel durchzulassen, während sie ferner dazu eingerichtet ist, thorakale und einatembare Partikel aus dem Aerosolstrom herauszufiltern.

Der Einsatz einer selektiv arbeitende Abscheidevorrichtung ist vor allem dann von Vorteil, wenn es sich bei dem Partikelsensor um einen Partikelsensor handelt, der insbesondere auf kleine Partikelgrößen kalibriert ist. Da solche, auf kleine Partikelgrößen kalibrierte Partikelsensoren eine ohnehin verbesserte Auflösung und Messgenauigkeit gewährleisten als unkalibrierte Sensoren, verbessert die Vorsehung der vorzugsweise selektiv arbeitenden Abscheidevorrichtung die Messgenauigkeit des Partikelsensors weiter, so dass besonders genaue und aussagefähige Messergebnisse erhalten werden.

Es ist im Sinne der Erfindung bevorzugt, dass der Partikelsensor ein optisch arbeitender Partikelsensor ist. Dabei kann der Partikelsensor des vorgeschlagenen Kits beispielsweise auf dem Prinzip der Laserstreuung basieren, wobei die auf diese Weise optisch erhobenen Messdaten unter Verwendung verschiedener Auswertungsverfahren und Algorithmen ausgewertet und analysiert werden können.

In einem zweiten Aspekt betrifft die Erfindung die Verwendung des vorgeschlagenen Kits in einer Staub-Vorrichtung. Das Kit kann insbesondere zur Erkennung bzw. Analyse von Partikeln in einem Fluidstrom, der durch die Staub-Vorrichtung strömt, verwendet werden. In einer besonders bevorzugten Ausführungsform ist die Verwendung des Kits dadurch gekennzeichnet, dass die Abscheidevorrichtung innerhalb des Kits dem Partikelsensor vorgelagert angeordnet ist und dazu eingerichtet ist, nur alveolengängige Partikel in dem Fluidstrom zu belassen, so dass nur die alveolengängigen Partikel den Partikelsensor erreichen und von diesem analysiert werden. Die alveolengängigen Partikel weisen vorzugsweise Partikeldurchmesser in einem Bereich von 0 bis 10 µm auf. Somit ist die Abscheidevorrichtung vorzugsweise dazu eingerichtet, Partikel mit einem Durchmesser von größer als 10 µm aus dem Fluidstrom herauszufiltern, so dass diese Partikel mit einem Durchmesser von größer als 10 µm den Fluidstrom verlassen müssen, bevor sie den Partikelsensor bzw. seinen Messbereich erreichen.

In einer besonders bevorzugten Ausgestaltung der Erfindung kann das vorgeschlagene Kit zur Steuerung der Staub-Vorrichtung verwendet werden. Die Steuerung der Staubvorrichtung erfolgt insbesondere in Abhängigkeit von Messdaten, die mit dem Kit erhoben werden. Dabei ist es bevorzugt, dass die Messdaten, die zur Steuerung der Staub-Vorrichtung verwendet werden, mit dem Kit, vorzugsweise dem Partikelsensor des Kits, erhoben werden. Dabei ist dem Partikelsensor die Abscheidevorrichtung des Kits vorgelagert. Das bedeutet im Sinne der Erfindung bevorzugt, dass an einer ersten Position innerhalb des Kits die Abscheidevorrichtung vorliegt und in einer zweiten Position innerhalb des Kits der Partikelsensor. Es ist im Sinne der Erfindung bevorzugt, dass Partikel, die in Abhängigkeit von ihrem Durchmesser untersucht bzw. analysiert werden sollen, zunächst in die Abscheidevorrichtung gelangen. Dort erfolgt vorzugsweise eine Sortierung und Filterung der Partikel dergestalt, dass lediglich alveolengängige Partikel in dem Fluidstrom verbleiben, während Partikel mit einem Durchmesser von größer als 10 µm von der Abscheidevorrichtung herausgefiltert werden und den Fluidstrom verlassen müssen. Dies führt dazu, dass vorteilhafterweise nur ein Bruchteil der zuvor in dem Fluidstrom enthaltene Partikel in dem Fluidstrom verbleiben, der anschließend von dem Partikelsensor analysiert wird. Dies erhöht die Messgenauigkeit des Sensors und schützt die bevorzugt optische Erfassungseinheit des Partikelsensors vor Verschmutzungen und daraus resultierenden Beschädigungen. Die Messdaten, die mit dem Kit erhoben und zur Steuerung der Staub-Vorrichtung verwendet werden können, betreffen insbesondere die Partikelgrößen der Partikel in dem zu analysierenden Fluidstrom.

Es ist im Sinne der Erfindung bevorzugt, dass der Partikelsensor beispielsweise dazu eingerichtet ist, eine Partikelanzahl und einen Volumenstrom zu erfassen. Aus diesen Messwerten kann vorteilhafterweise die Partikelkonzentration berechnet werden. Die Partikelkonzentration kann beispielsweise in der Einheit Milligramm pro Kubikmeter (mg/m³) angegeben werden. Insbesondere kann die ermittelte Partikelkonzentration einem Partikelgrößenbereich entsprechend der PM-Kategorisierung zugeordnet werden. Es ist im Sinne der Erfindung ganz besonders bevorzugt, dass die Partikelkonzentration als Staubkonzentrationswert verwendet werden kann, um eine Staub-Vorrichtung zu steuern. In diesem Zusammenhang kann es bevorzugt sein, die Partikelkonzentration als Regelgröße in einem Regel- und Steuerkreis zu verwenden. Mit anderen Worten kann es im Sinne der Erfindung ganz besonders bevorzugt sein, die Staub-Vorrichtung in Abhängigkeit von der Partikelkonzentration bzw. des Staubkonzentrationswerts als Regelgröße zu steuern.

Es ist im Sinne der Erfindung bevorzugt, dass es sich bei der Staub-Vorrichtung um einen Luftreiniger, eine Staubsaugvorrichtung oder eine Stauberfassungseinrichtung handelt. Bei dem Luftreiniger kann es sich beispielsweise um ein alleinstehendes Gerät zur Reinigung von Luft in einem vorzugsweise im Wesentlichen geschlossenen Raum handeln. Solche Luftreiniger werden beispielsweise auf Baustellen zur Staubbindung bzw. zur Entfernung von Staub aus dem Arbeitsbereich eines Arbeiters eingesetzt. Luftreiniger können allerdings auch in vielen anderen Bereichen eingesetzt werden, beispielsweise bei der Reinraumüberwachung, in Kliniken und Pflegeeinrichtungen oder in öffentlichen Gebäuden zur Überwachung der Luftqualität.

Es ist bekannt, dass beispielsweise bei der Arbeit mit Werkzeugmaschinen Staub, insbesondere Feinstaub, entstehen kann. Bei den Werkzeugmaschinen, die auf Baustellen eingesetzt werden, handelt es sich vorzugsweise um Schleif- oder Poliermaschinen, Sägen, Bohr- oder Meißelgeräte, sowie Kernbohrgeräte, ohne darauf beschränkt zu sein. Gerade bei Arbeiten im Innenbereich von Gebäuden, d.h. bei Renovierungs- oder Instandsetzungsarbeiten, kann es zu Problemen mit der Abführung von Staub kommen, da in geschlossenen Räumen beispielsweise kein Wind geht. Hier werden Luftreiniger erfolgreich eingesetzt, um die Staubbelastung für die auf der Baustelle tätigen Arbeiter und die Nutzer der Werkzeugmaschinen zu reduzieren. Da nicht jeder Staub gleichermaßen belastend für die menschliche Gesundheit ist, besteht ein Interesse daran, zu erfahren, wie der Staub konkret zusammengesetzt ist und inwiefern er eine Gesundheitsbelastung für die auf der Baustelle Tätigen darstellt. Dieses Interesse kann durch die Erfindung befriedigt werden, in dem das vorgeschlagene Kit einen Beitrag dazu leistet, dass Staub mit einer erhöhten Messgenauigkeit analysiert werden kann. Ferner kann mit der Erfindung insbesondere derjenige Anteil im Staub untersucht werden, der besonders gesundheitsrelevant ist. Der Einsatz der Erfindung in einem Baustellenkontext hat sich aufgrund der grundsätzlich besonders hohen Staubexposition der Arbeiter als besonders vorteilhaft erwiesen. Durch die besonders dicht mit Staub beladene Luft kann die Erfindung einen wesentlichen Beitrag dazu leisten, dass trotz der hohen Staubbeladung der Luft besonders genaue und verlässliche Messergebnisse von dem Partikelsensor erhalten werden können, indem insbesondere die größeren und für die Messung eigentlich weniger relevanten Partikel gar nicht erst in den Messbereich des Sensors gelangen.

Dieser Vorteil der Erfindung wird insbesondere durch die Anordnung von Abscheidevorrichtung und Partikelsensor innerhalb des vorgeschlagenen Kits erreicht. Es ist erfindungsgemäß vorgesehen, dass ein zu analysierender Fluidstrom mit zu analysierenden Partikeln zunächst in die Abscheidevorrichtung des Kits gelangt. Dort erfolgt eine Filterung bzw. Selektion der Partikel nach ihrer Größe bzw. nach ihrem Durchmesser. Es ist ferner vorgesehen, dass die Abscheidevorrichtung nur solche Partikel passieren lässt, die einen Durchmesser in einem Bereich von 0 bis 10 µm aufweisen. Größere Partikel werden von der Abscheidevorrichtung herausgefiltert und aus dem Fluidstrom entfernt. Insbesondere die in dem Fluidstrom verbleibenden Partikel mit einem Durchmesser in einem Bereich von 0 bis 10 µm werden an den Partikelsensor weitergeleitet. Dort, d.h. der Abscheidevorrichtung nachgelagert, kann eine Analyse der Partikel erfolgten, wobei die mit dem Partikelsensor erhobenen Messdaten, die beispielsweise die Zusammensetzung der Partikel im Fluidstrom oder ihre Größenverteilung betreffen, vorteilhafterweise dazu verwendet werden können, um eine mit dem Kit zusammenwirkende Staub-Vorrichtung zu steuern, d.h. beispielsweise ein- oder auszuschalten. Durch das Herausfiltern von Partikeln, die nicht alveolengängig sind, d.h. keinen Feinstaub darstellen, weil sie einen Durchmesser von größer als 10 µm aufweisen, können auch im Baustellenbereich besonders feine und fein-kalibrierte Partikelsensoren eingesetzt werden, die bisher für den Einsatz im Baugewerbe kaum eingesetzt werden konnten, weil sie zu schnell verschmutzten und unbrauchbar wurden.

Es ist im Sinne der Erfindung besonders bevorzugt, dass die mit dem Partikelsensor erhaltenen Messwerte zur Steuerung einer Staub-Vorrichtung verwendet werden können. Beispielsweise kann die Staub-Vorrichtung, z.B. der Luftreiniger oder ein Staubsauger, in Abhängigkeit von den Messwerten, die mit dem Partikelsensor ermittelt werden, ein- oder ausgeschaltet werden. Wenn von dem Partikelsensor beispielsweise eine besonders hohe Anzahl von gesundheitsrelevanten Feinstaubpartikeln in der Luft eines zu überwachenden Raumes oder Baustellenabschnittes festgestellt wird, kann die Staub-Vorrichtung eingeschaltet werden. Bei einer deutlichen Reduzierung der gesundheitsrelevanten Feinstaubpartikeln in der Luft, die von dem Partikelsensor detektiert werden kann, kann die Staub-Vorrichtung vorteilhafterweise wieder ausgeschaltet werden. Dazu kann das vorgeschlagenen Kit, insbesondere der Partikelsensor, über eine Kommunikationsverbindung mit der Staub-Vorrichtung informationstechnologisch verbunden sein. Es ist im Sinne der Erfindung ganz besonders bevorzugt, dass die Staub-Vorrichtung eine Steuereinheit umfasst, mit der das Kit bzw. der Partikelsensor über die Kommunikationsverbindung verbunden ist. Die Kommunikationsverbindung kann beispielsweise auf WLAN oder Bluetooth basieren. Vorzugsweise können Steuerbefehle, die auf den mit dem Kit ermittelten Messergebnissen basieren, von dem Kit, insbesondere dem Partikelsensor, an die Staub-Vorrichtung übermittelt werden, wobei die Steuerbefehle in der Staubvorrichtung zu einer Zustandsänderung, Änderung des Betriebszustands oder Änderung von Betriebsparametern führen können. Mit anderen Worten können die vom Partikelsensor ermittelten Messdaten nicht nur zum Ein- oder Ausschalten der Staub-Vorrichtung verwendet werden, sondern auch um Betriebsparameter der Staub-Vorrichtung, vorzugsweise auch stufenlos, einzustellen oder zu regeln. Die Umsetzung der Steuerbefehle erfolgt vorzugsweise in der Steuereinheit der Staub-Vorrichtung, wobei die Steuereinheit vorzugsweise dazu eingerichtet ist, mit Komponenten der Staub-Vorrichtung zusammenzuwirken und diese zu steuern und/oder zu betätigen. Bei den Komponenten der Staub-Vorrichtung kann es sich beispielsweise um Motoren, Turbinen, Pumpen oder dergleichen handeln, die wesentliche Funktionen der jeweiligen Staub-Vorrichtung ausführen. Es kann im Sinne der Erfindung auch bevorzugt sein, dass die Messwerte des Partikelsensors erst in der Steuereinheit der Staub-Vorrichtung ausgewertet werden. In diesem Fall werden insbesondere die vorzugsweiseweise rohen Messergebnisse von dem Kit an die Staub-Vorrichtung unter Verwendung der Kommunikationsverbindung übermittelt.

Bei der Staub-Vorrichtung kann es sich auch um eine Staubsaugvorrichtung, wie einen Staubsauger oder einen Baustellensauger, handeln. Die Staubsaugvorrichtung kann beispielsweise ein vorgeschlagenes Kit umfassen oder von dem Kit gesteuert werden. Diese Steuerung in Abhängigkeit von Messwerten, die mit dem Kit, vorzugsweise dem Partikelsensor des Kits, erhoben werden, erfolgt analog zu der Steuerung wie sie zuvor in Bezug auf den Luftreiniger beschrieben wurde.

Das vorgeschlagene Kit kann auch in Zusammenhang mit einer Stauberfassungseinrichtung verwendet werden. Denkbar ist beispielsweise die Ausstattung der Arbeiter auf einer Baustelle mit einer persönlichen Stauberfassungseinrichtung im Sinne eines individuellen "Staub-Dosimeters", das in der Lage ist, die individuelle Staubexposition eines Arbeiters, beispielsweise pro Zeiteinheit, zu ermitteln bzw. anzuzeigen oder auszuwerten. Durch den Einsatz des vorgeschlagenen Kits in einer solchen persönlichen Stauberfassungseinrichtung kann die Feinstaubexposition des einzelnen Arbeiters besonders genau ermittelt werden. Die persönliche Stauberfassungseinrichtung kann über geeignete Kommunikationsmittel verfügen, um die ermittelten Staubexpositionsdaten bzw. die Feinstaubmengen an eine zentrale Verarbeitungs- oder Speichervorrichtung weiterzuleiten, so dass beispielsweise ein Arbeitgeber oder Baustellenbetreiber erforderlichenfalls geeignete Gegenmaßnahmen zur Reduzierung der Staubexposition der Arbeiter ergreifen kann.

Bei der Verwendung des vorgeschlagenen Kits in einer Staub-Vorrichtung ist jeweils vorgesehen, dass ein zu analysierender Fluidstrom durch einen Messpfad geführt wird, wobei der Messpfad vorzugsweise in Strömungsrichtung des Fluidstroms hinter der Abscheidevorrichtung beginnt und durch den Partikelsensor des Kits führt. Der Fluidstrom umfasst Partikel, deren Eigenschaften mit dem Partikelsensor untersucht werden sollen. Das vorgeschlagene Kit ist so aufgebaut, dass der Fluidstrom zunächst in die Abscheidevorrichtung strömt, wobei von der Abscheidevorrichtung diejenigen Partikel aus dem Fluidstrom herausgefiltert werden, die einen Durchmesser von größer als 10 µm aufweisen, d.h. nicht alveolengängig sind. Nur die alveolengängigen Partikel mit einem Durchmesser von kleiner als 10 µm werden von der Abscheidevorrichtung durchgelassen und können in dem Fluidstrom verbleiben. Der Fluidstrom gelangt dann in einen Messbereich des vorzugsweise optisch arbeitenden Partikelsensors. Dort erfolgt die Untersuchung der in dem Fluidstrom verbliebenen Partikel. Anschließend verlässt der Fluidstrom das vorgeschlagenen Kit und setzt seinen Weg durch die Staubvorrichtung fort.

Es kann im Sinne der Erfindung auch bevorzugt sein, dass eine persönliche Stauberfassungseinrichtung mit einem Luftreiniger und/oder einer Staubsaugvorrichtung zusammenwirkt. Dabei kann die Datenerhebung bzw. der Feinstaubmenge bzw. -exposition beispielsweise in der persönlichen Stauberfassungseinrichtung erfolgen, während die ermittelten Daten dazu verwendet werden, den Betrieb des Luftreinigers bzw. der Staubsaugvorrichtung zu steuern. In diesem Sinne stellt die persönliche Stauberfassungseinrichtung ein externes Stauberfassungsmodul dar, dessen Messergebnisse verwendet werden, um Staub-Vorrichtungen, wie Luftreiniger und/ oder Staubsaugvorrichtung, zu steuern. Das vorgeschlagene Kit kann in dieser bevorzugten Ausgestaltung der Erfindung Bestandteil der persönlichen Stauberfassungseinrichtung und/oder der weiteren Staub-Vorrichtung, wie Luftreiniger oder Staubsaugvorrichtung, sein. In dieser Ausführungsform der Erfindung ist es bevorzugt, dass zwischen der persönlichen Stauberfassungseinrichtung und dem Luftreiniger bzw. der Staubsaugvorrichtung eine Kommunikationsverbindung besteht. Diese kann beispielsweise auf WLAN oder Bluetooth basieren. Es kann im Sinne der Erfindung ebenso bevorzugt sein, dass das vorgeschlagene Kit, beispielsweise als internes Stauberfassungsmodul, in dem Luftreiniger bzw. der Staubsaugvorrichtung integriert vorliegt. Der zu untersuchende Fluidstrom kann dann beispielsweise aus einem größeren Fluidstrom, der durch die Staub-Vorrichtung strömt, im Sinne eines Bypasses abgezweigt werden.

In einem weiteren Aspekt betrifft die Erfindung eine Staub-Vorrichtung, die ein vorgeschlagenen Kit umfasst. Bei der Staub-Vorrichtung handelt es sich insbesondere um einen Luftreiniger, eine Staubsaugvorrichtung oder eine (persönliche) Stauberfassungseinrichtung. Die vorgeschlagene Staub-Vorrichtung umfasst insbesondere einen Partikelsensor und eine Abscheidevorrichtung, wobei der Partikelsensor dazu eingerichtet ist, Partikel in einem Fluidstrom zu analysieren. Die Abscheidevorrichtung ist innerhalb des Kits dem Partikelsensor vorgelagert und ferner dazu eingerichtet, nur alveolengängige Partikel in dem Fluidstrom zu belassen. Dies bedeutet, dass von der Abscheidevorrichtung insbesondere solche Partikel durchgelassen werden, die einen Partikeldurchmesser von 0 bis 10 µm aufweisen. Solche Partikel mit einem Partikeldurchmesser von 0 bis 10 µm werden insbesondere als "Feinstaub" bezeichnet. Bei der vorgeschlagenen Staub-Vorrichtung erreichen vorteilhafterweise nur solche Feinstaubpartikel den Partikelsensor. Das bedeutet, dass auch nur die alveolengängigen Partikel von dem Partikelsensor analysiert werden und nur solche Messdaten beispielsweise zur Steuerung der Staub-Vorrichtung verwendet werden, die auf solchen Feinstaub-Messungen beruhen.

In noch einem weiteren Aspekt betrifft die Erfindung ein Verfahren zur Steuerung einer vorgeschlagenen Staub-Vorrichtung, wobei die Staub-Vorrichtung ein vorgeschlagenes Kit mit einer Abscheidevorrichtung und einem Partikelsensor aufweist. Das Verfahren ist durch die folgenden Schritte gekennzeichnet:
a) Bereitstellung einer vorgeschlagenen Staub-Vorrichtung, wobei die Staub-Vorrichtung ein vorgeschlagenes Kit umfasst,
b) Ermittlung von Messdaten, die die im Fluidstrom befindlichen Partikel betreffen, wobei die Ermittlung der Messdaten mit dem Partikelsensor des vorgeschlagenen Kits erfolgt,
c) Steuerung der Staub-Vorrichtung in Abhängigkeit der in Schritt b) ermittelten Messdaten.

Es ist im Sinne der Erfindung insbesondere bevorzugt, dass die Staub-Vorrichtung ein vorgeschlagenes Kit mit einer einem Partikelsensor vorgelagerten Abscheidevorrichtung aufweist. Mit anderen Worten beruht auch das vorgeschlagene Steuerungsverfahren auf die besonders geschickte Anordnung von Abscheidevorrichtung und Partikelsensor innerhalb des vorgeschlagenen Kits. Durch diese vorteilhafte Anordnung werden nur die aufgrund ihrer Größe wirklich gesundheitsrelevanten Partikel von dem Partikelsensor untersucht, während die übrigen Partikel, die die Genauigkeit der Messung reduzieren würden, vorher durch die Abscheidevorrichtung aus dem Fluidstrom entfernt werden. Dadurch können besonders genaue Messdaten für die Steuerung der Staub-Vorrichtung bereitgestellt werden und die Staub-Vorrichtung beispielsweise besonders energiesparend, leise oder filterschonend betrieben werden.

Es ist im Sinne der Erfindung bevorzugt, dass das Kit als externes oder internes Stauberfassungsmodul vorliegt. Mit anderen Worten kann das Kit ein externes Stauberfassungsmodul darstellen, das mit einer Staub-Vorrichtung über eine Kommunikationsverbindung in informationstechnologischer Verbindung steht, damit zum Beispiel Messdaten oder Steuerbefehle ausgetauscht werden können. In dieser Ausgestaltung der Erfindung kann das Kit ein externes Stauberfassungsmodul beispielsweise in einem Raum aufgestellt sein, dessen Luftqualität überwacht werden soll. Dabei kann es sich zum Beispiel um einen Raum in einem zu renovierenden Gebäude handeln, in dem Arbeiten mit einer Handwerkzeugmaschine durchgeführt werden, wobei bei den Arbeiten Staub anfällt. Das externe Stauberfassungsmodul, das insbesondere einen Partikelsensor und eine dem Partikelsensor vorgelagerte Abscheidevorrichtung aufweist, kann dann die Partikel in einem Fluidstrom untersuchen und die ermittelten Messdaten an eine Staub-Vorrichtung übermitteln. Dort können die Messdaten dazu verwendet werden, Einstellungen an der Staub-Vorrichtung vorzunehmen, mithin die Staub-Vorrichtung zu steuern. Dazu kann die Staub-Vorrichtung eine Steuereinheit umfassen. Es ist im Sinne der Erfindung bevorzugt, dass zwischen dem Kit und der Staub-Vorrichtung eine Kommunikationsverbindung besteht. Dies gilt vorzugsweise dann, wenn das Kit als externes Stauberfassungsmodul vorliegt und insbesondere nicht in der Staub-Vorrichtung integriert vorliegt.

In einer alternativen Ausgestaltung der Erfindung kann das Kit innerhalb der Staub-Vorrichtung ein integriertes Stauberfassungsmodul darstellen. In diesem Fall kann ein kleiner Fluidstrom aus einem größeren Fluidstrom, der durch die Vorrichtung strömt, abgezweigt und analysiert werden.

Die für das Kit eingeführten Begriffe, Definitionen und technischen Vorteile gelten vorzugsweise für seine Verwendung, die Staub-Vorrichtung und das vorgeschlagene Steuerungsverfahren analog.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: schematische Darstellung einer bevorzugten Ausgestaltung des Kits
- Fig. 2: schematische Darstellung einer bevorzugten Ausgestaltung der Staub-Vorrichtung, die mit einer bevorzugten Ausgestaltung des Kits als externem Stauberfassungsmodul zusammenwirkt
- Fig. 3: schematische Darstellung einer bevorzugten Ausgestaltung der Staub-Vorrichtung, die mit einer bevorzugten Ausgestaltung des Kits als integriertem Stauberfassungsmodul zusammenwirkt

### Ausführungsbeispiele und Figurenbeschreibung:

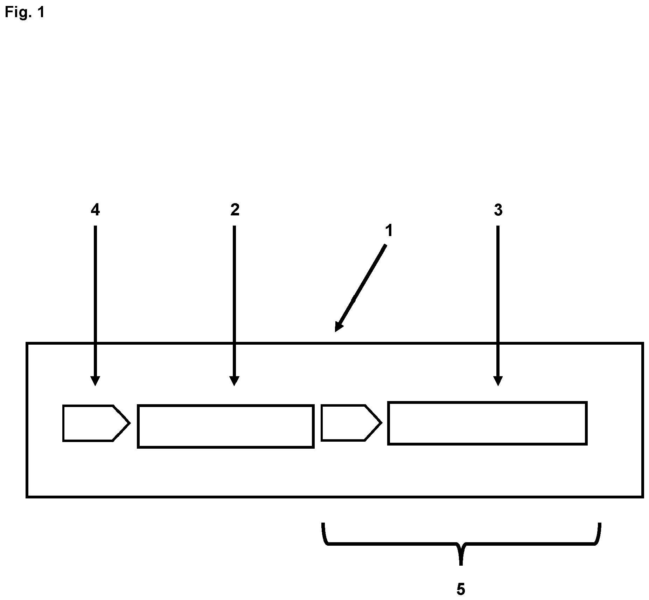

Figur 1 zeigt eine bevorzugte Ausführungsform des vorgeschlagenen Kits (1). Insbesondere zeigt Fig. 1 die Komponenten des Kits (1), d.h. die Abscheidevorrichtung (2) und den Partikelsensor (3). Der Partikelsensor (3) ist dazu eingerichtet, Partikel in einem Fluidstrom (4) zu analysieren. Dazu wird der Fluidstrom (4) durch die Abscheidevorrichtung (2) und den Partikelsensor (3) geführt. Erfindungsgemäß ist vorgesehen, dass die Abscheidevorrichtung (2) dazu eingerichtet ist, diejenigen Partikel, die einen Durchmesser von größer als 10 µm aufweisen, aus dem Fluidstrom (4) herauszufiltern. Diese Filterung bzw. Größenselektion kann beispielsweise durch einen Zyklon, einen Fliehkraftabscheider oder eine Umlenkkammer erfolgen. Die Partikel mit einem Durchmesser von größer als 10 µm werden von der Abscheidevorrichtung (2) aus dem Fluidstrom (4) entfernt. Der Fluidstrom (4) und die in Strömungsrichtung hinter der Abscheidevorrichtung (2) in dem Fluidstrom (4) verbleibenden Partikel werden weiter in Richtung des Partikelsensors (3) geleitet. Dort passieren sie den Messpfad (5), der vorzugsweise einen Messbereich des Partikelsensors (3) umfasst. Vorzugsweise erreichen nur diejenigen Partikel den Messpfad (5), die einen Durchmesser von kleiner als 10 µm aufweisen bzw. deren Durchmesser in einem Bereich von 0 bis 10 µm liegt. Bei diesen Partikeln handelt es sich um die besonders gesundheitsrelevanten Partikel, da sie die Wände der Lungenbläschen passieren und so in das Innere des menschlichen Organismus gelangen können. Sie werden im Sinne der Erfindung bevorzugt als «alveolengängig» oder als «Feinstaub» bezeichnet. Es ist im Sinne der Erfindung bevorzugt, dass die Partikel im Fluidstrom (4) bzw. im Messpfad (5) durch den Partikelsensor (3) mit optischen Analysemethoden untersucht werden. Dabei kann es sich beispielsweise um Verfahren, die auf der Streuung von Laserlicht basieren, handeln.

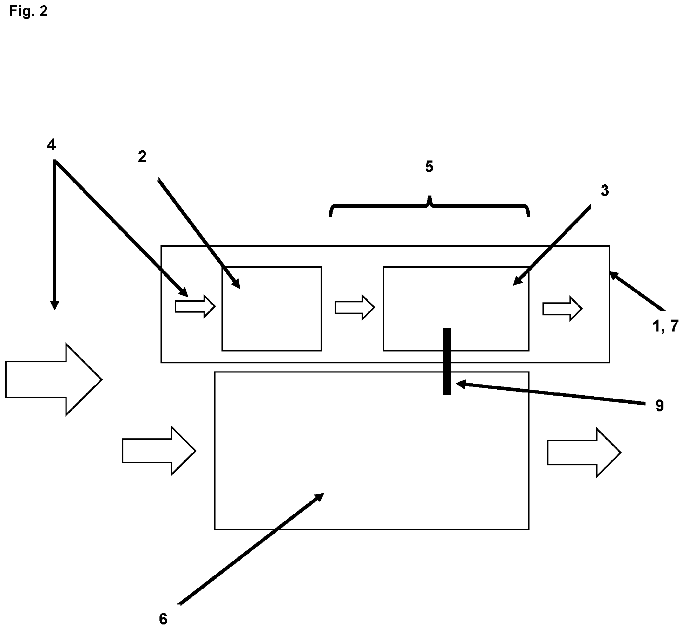

Fig. 2 zeigt eine schematische Darstellung einer bevorzugten Ausgestaltung des Kits (1), wobei das Kit (1) als externes Stauberfassungsmodul (7) mit einer Staub-Vorrichtung (6) zusammenwirkt. Bei der Staub-Vorrichtung (6) kann es sich um einen Luftreiniger, eine Staubsaugvorrichtung oder um eine (persönliche) Stauberfassungseinrichtung handeln, ohne darauf beschränkt zu sein. Es ist im Sinne der Erfindung bevorzugt, dass das Kit (1) mit seinen Komponenten, der Abscheidevorrichtung (2) und dem Partikelsensor (3), als in sich geschlossene Einheit außerhalb der Staub-Vorrichtung (6) vorliegt. Vorzugsweise kann zwischen der Staub-Vorrichtung (6) und dem Kit (1) eine Kommunikationsverbindung (9) vorliegen. Mit anderen Worten können das Kit (1) und die Staub-Vorrichtung (6) unter Verwendung einer Kommunikationsverbindung (9) miteinander kommunizieren. Diese Kommunikation kann beispielsweise in dem Austausch von Daten, Messergebnisse und/oder Steuerbefehlen bestehen, ohne darauf beschränkt zu sein. Vorzugsweise besteht die Kommunikationsverbindung (9) insbesondere zwischen den Partikelsensor (3) des Kits (1) und der Staub-Vorrichtung (6). Das Kit (1) kann zum Zwecke der Herstellung der Kommunikationsverbindung (9) eine Kommunikationsvorrichtung, wie einen Sender (nicht dargestellt), umfassen. Die Staub-Vorrichtung (6) kann zum Erhalt der Daten des Kits (1) eine als Empfänger ausgestaltete Kommunikationsvorrichtung (nicht dargestellt) umfassen. Vorzugsweise ist die Kommunikationsverbindung (9) zwischen Kit (1) und Staub-Vorrichtung (6) bidirektional ausgerichtet, so dass beispielsweise auch das Kit (1) bzw. sein Partikelsensor (3) zum Empfangen von Daten eingerichtet und die Staub-Vorrichtung (6) zum Senden von Daten eingerichtet sein kann. Die Staub-Vorrichtung (6) kann ferner eine Steuereinheit (nicht dargestellt) umfassen, in der beispielsweise die von dem Partikelsensor (3) des Kits (1) erhaltenen Daten ausgewertet und in Steuerbefehle für die Staub-Vorrichtung (6) umgewandelt werden können. Es ist im Sinne der Erfindung ganz besonders bevorzugt, dass die Staub-Vorrichtung (6) in Abhängigkeit von den Messergebnissen, die mit dem Kit (1) bzw. seinem Partikelsensor (3) ermittelt werden, gesteuert werden kann.

Vorzugsweise kann mit dem Kit (1) die Luft bzw. deren Beladung mit Partikeln verschiedener Größe in der Umgebung der Staub-Vorrichtung (6) untersucht werden. Bei der Staub-Vorrichtung (6) handelt es sich vorzugsweise um eine Vorrichtung, durch die ein Fluidstrom (4) strömt. Dieser Fluidstrom (4) enthält Partikel, deren Eigenschaften mit dem Kit (1) bzw. dem Partikelsensor (3) des Kits (1) untersucht werden sollen. Dazu kann beispielsweise ein Bypass-Fluidstrom (4) gebildet werden, der anstatt durch die Staub-Vorrichtung (6) durch das Kit (1) geführt wird. Der Bypass-Fluidstrom (4) bzw. die darin enthaltenen Partikel weisen vorzugweise im Wesentlichen dieselben Eigenschaften auf, wie der Fluidstrom (4), der durch die Staub-Vorrichtung (6) strömt. Dadurch wird sichergestellt, dass die Messergebnisse, die mit dem Kit (1) ermittelt werden, auch für die Staub-Vorrichtung (6) Gültigkeit haben und zu deren Steuerung verwendet werden können. Auch bei der Verwendung des vorgeschlagenen Kits (1) als externes Stauberfassungsmodul (7) ist die Abscheidevorrichtung (2) dem Partikelsensor (3) innerhalb des Kits (1) vorgelagert. Dadurch können die nicht-alveolengängigen Partikel mit der Abscheidevorrichtung (2) aus dem Fluidstrom (4) herausgefiltert werden, bevor sie den Messpfad (5) oder den Partikelsensor (3) erreichen.

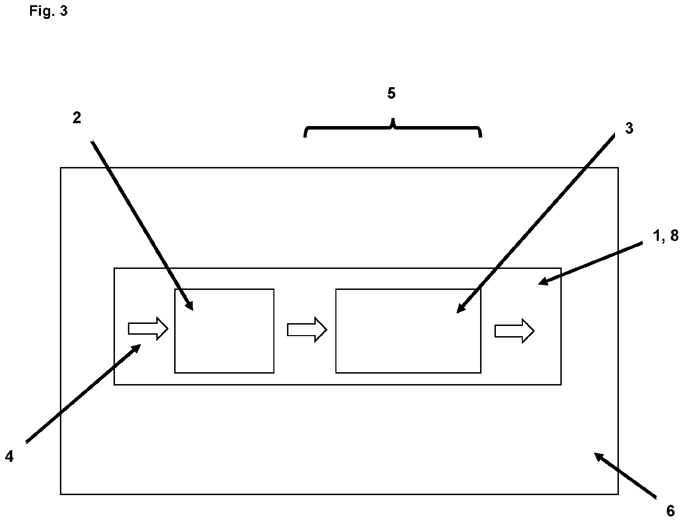

Fig. 3 zeigt eine schematische Darstellung einer bevorzugten Ausgestaltung der Staub-Vorrichtung (6), wobei die Staub-Vorrichtung (6) mit einer bevorzugten Ausgestaltung des Kits (1) als integriertem Stauberfassungsmodul (8) zusammenwirkt. In der in Fig. 3 dargestellten bevorzugten Ausgestaltung der Erfindung liegt das vorgeschlagene Kit (1) als internes Stauberfassungsmodul (8) vor und kann beispielsweise in der Staub-Vorrichtung (6) integriert vorliegen. Mit anderen Worten kann das vorgeschlagene Kit (1) als internes Stauberfassungsmodul (8) ausgebildet sein. Es kann beispielsweise eine in sich geschlossene Einheit darstellen, die beispielsweise im Inneren der Staub-Vorrichtung (6) vorliegt. Es kann in einer alternativen Ausgestaltung der Erfindung bevorzugt sein, dass das interne Stauberfassungsmodul (8) an einer Außenseite oder Außenwand der Staub-Vorrichtung (6) angeordnet vorliegt. Vorzugsweise kann das als internes Stauberfassungsmodul (8) ausgebildete Kit (1) einfach aus der Staub-Vorrichtung (6) entnommen und ausgetauscht werden. Das interne Stauberfassungsmodul (8) kann beispielsweise mit Daten- oder Energieversorgungsleitungen (nicht dargestellt) mit der Staub-Vorrichtung (6) verbunden sein. Vorzugsweise kann das interne Stauberfassungsmodul (8) über die Energieversorgungsleitungen mit Energie versorgt werden, während über die Datenleitungen eine Kommunikation im Sinne eines Austauschs von Daten, Messergebnissen und/oder Steuerbefehlen erfolgen kann. Es ist im Sinne der Erfindung insbesondere bevorzugt, dass die Staub-Vorrichtung (6) mit Messergebnissen, die von dem Kit (1) bzw. dem Partikelsensor (3) des Kits (1) ermittelt werden, gesteuert werden kann. Dazu können die Messergebnisse des internen Stauberfassungsmoduls (8) an die Staub-Vorrichtung (6) oder eine Steuereinheit (nicht dargestellt) der Staub-Vorrichtung (6) übermittelt werden. Es kann in einer ersten bevorzugten Ausgestaltung der Erfindung bevorzugt sein, dass die Messergebnisse in dem Kit (1) selbst ausgewertet und Steuerbefehle für die Staub-Vorrichtung (6) aus den Messergebnisse abgeleitet werden, wobei in dieser Ausführungsform der Erfindung insbesondere die Steuerbefehle an die Staub-Vorrichtung (6) übermittelt werden. In einer alternativen Ausgestaltung der Erfindung kann die Auswertung der Messergebnisse in der Staub-Vorrichtung (6) bzw. in der Steuereinheit der Staub-Vorrichtung (6) erfolgen. In diesem Fall werden insbesondere die rohen oder im Wesentlichen rohen Messdaten bzw. Messergebnisse von dem internen Stauberfassungsmodul (8) an die Staub-Vorrichtung (6) übermittelt.

### Bezugszeichenliste

- 1: Kit
- 2: Abscheidevorrichtung
- 3: Partikelsensor
- 4: Fluidstrom
- 5: Messpfad
- 6: Staub-Vorrichtung
- 7: externes Stauberfassungsmodul
- 8: internes bzw. integriertes Stauberfassungsmodul
- 9: Kommunikationsverbindung

## Patentansprüche

1. Kit (1) umfassend eine Abscheidevorrichtung (2) und einen Partikelsensor (3), wobei der Partikelsensor (3) dazu eingerichtet ist, Partikel in einem Fluidstrom (4) zu analysieren,
**dadurch gekennzeichnet, dass**
die Abscheidevorrichtung (2) in dem Kit (1) dem Partikelsensor (3) vorgelagert angeordnet ist und dazu eingerichtet ist, nur alveolengängige Partikel in dem Fluidstrom (4) zu belassen, so dass nur die alveolengängigen Partikel den Partikelsensor (3) erreichen und von diesem analysiert werden.

2. Kit (1) nach Anspruch 1
**dadurch gekennzeichnet, dass**
die Abscheidevorrichtung (2) als Fliehkraftabscheider, Umlenkkammer oder als Zyklon ausgebildet ist.

3. Kit (1) nach Anspruch 1 oder 2
**dadurch gekennzeichnet, dass**
die Abscheidevorrichtung (2) eine selektiv arbeitende Abscheidevorrichtung ist.

4. Kit (1) nach einem der vorhergehenden Ansprüche
**dadurch gekennzeichnet, dass**
der Partikelsensor (3) ein optisch arbeitender Partikelsensor ist.

5. Verwendung des Kits (1) nach einem der vorhergehenden Ansprüchen in einer Staub-Vorrichtung (6)

6. Verwendung des Kits (1) nach Anspruch 5 zur Steuerung der Staub-Vorrichtung (6) in Abhängigkeit von Messdaten, die mit dem Kit (1) erhoben werden.

7. Verwendung des Kits (1) nach Anspruch 5 oder 6
**dadurch gekennzeichnet, dass**
es sich bei der Staub-Vorrichtung (6) um einen Luftreiniger, eine Staubsaugvorrichtung oder eine Stauberfassungseinrichtung handelt.

8. Staub-Vorrichtung (6)
**dadurch gekennzeichnet, dass**
die Staub-Vorrichtung (6) ein Kit (1) nach einem der Ansprüche 1 bis 4 umfasst.

9. Verfahren zur Steuerung einer Staub-Vorrichtung (6) nach Anspruch 8 umfassend ein Kit (1) nach einem der Ansprüche 1 bis 4, wobei das Verfahren **die folgenden Schritte umfasst:**
a) Bereitstellung einer Staub-Vorrichtung (6) nach Anspruch 8 umfassend ein Kit (1) nach einem der Ansprüche 1 bis 4,
b) Ermittlung von Messdaten, die die im Fluidstrom (4) befindlichen Partikel betreffen, wobei die Ermittlung der Messdaten mit dem Partikelsensor (3) des vorgeschlagenen Kits erfolgt,
c) Steuerung der Staub-Vorrichtung (6) in Abhängigkeit der in Schritt b) ermittelten Messdaten.

10. Verfahren nach Anspruch 9,
**dadurch gekennzeichnet, dass**
das Kit (1) als externes Stauberfassungsmodul (7) oder internes Stauberfassungsmodul (8) der Staub-Vorrichtung (6) vorliegt.

11. Verfahren nach Anspruch 9 oder 10,
**dadurch gekennzeichnet, dass**
zwischen dem Kit (1) und der Staub-Vorrichtung (6) eine Kommunikationsverbindung (9) besteht.
